# EUROPEAN PATENT SPECIFICATION

(11) **EP 2 248 858 B1**
(45) Date of publication and mention of the grant of the patent: **08.03.2017**
(21) Application number: 10159847.2
(22) Date of filing: 14.04.2010
(51) Int. Cl.: C08L 77/00, C08L 77/02, C08L 77/06, B32B 27/34, B32B 27/32, C08G 69/36, C08K 3/34

(54) **High abuse heat shrinkable film**
Widerstandsfähige wärmeschrumpfbare Folie
Film thermorétractable à forte résistance mécanique

(30) Priority: 16.04.2009 EP 09158009
(43) Date of publication of application: 10.11.2010
(73) Proprietor: Flexopack S.A., 194 00 Koropi (GR)
(72) Inventor: Gkinosatis, Dimitris, 19400, Koropi Attica (GR)
(74) Representative: Isarpatent

(56) References cited:
- EP-A1- 0 692 374
- EP-A1- 2 143 752
- JP-A- 2006 111 762
- JP-A- 2006 111 763
- US-A1- 2007 092 744
- US-B1- 6 416 832

## Description

The present invention refers to a multilayer heat shrinkable film characterized by a combination of desirable properties, such as high shrinkage, good optical properties, excellent sealability, high abuse and high puncture resistance. The invention further is directed to a method of producing said film. The invention is further directed to the use of said film or bags and pouches made thereof for packaging goods as for example food products. The invention also refers to tubes made with the film.

Generally, the packaging of food items by means of a heat shrinkable bag comprises the following steps
1. Putting the food item inside the bag and removing the air (vacuumising) with the help of a vacuum device.
2. Sealing of the open end of the bag.
3. Placing the vacuum pack in a heat shrinking media such as hot water under a temperature that ensures the shrink of the pack (e.g. 90°C).
4. The pack is ready and is characterized by appealing appearance and long shelf life because of the absence of oxygen.

These films need high shrink properties and good optics to ensure an excellent appearance and excellent sealability so that there is no entrance of oxygen to the pack as this would be detrimental for the shelf life of the food.

In some cases, where the food is stored in frozen conditions for example, there is the possibility to use a non gas barrier film. The other characteristics remain the same.

Packaging films with the above properties are well known in the art.

A problem that is often found in the art is that during the packaging process the items to be packed are extremely tough or hard (e.g. bone-in meat pieces). This results in breakages of the plastic film during the packaging process. Packaging materials with high abuse and puncture resistance are desirable in order to withstand the packing of hard products with less scrap.

This problem has been addressed in the past.

Patent US 6183791 proposes the use of heat shrinkable film bonded to a heat shrinkable patch which adds strength to the film. This solution is effective but very expensive.

Patent EP 0692374 proposes the use of copolyamides with melting points less than 160C for blending with polyamide 6/66. These copolyamides are exceptionally expensive and they lack oxygen barrier.

EP 0 692 374 A1 disclose heat-shrinkable films comprising a layer comprising a blend of two different copolyamids e.g. 80% of a copolyamide 6/66 and 20% of a copolyamide 6/12.

US 2007/092744 A1 discloses the use of a nylon blend comprising copolyamide 6/66/12 together with a copolyamide 6/69, and an amorphous nylon copolyamide.

### SUMMARY OF THE INVENTION

Therefore, the problem underlying the invention is to provide a heat sealable film, which has also good shrinkability, high abuse and puncture resistance and is easy to orient.

These problems are solved by the subject-matter of the independent claims. Preferred embodiments are set forth in the dependent claims.

The inventors have managed to overcome all of these problems by discovering a film combining
1. Excellent abuse and puncture resistance.
2. Excellent sealing properties over a big range of machine conditions.
3. Excellent optical properties
4. Manufacturing in a stable and controlled way.

This is achieved by a heat shrinkable film comprising at least one layer consisting of a blend of a first copolyamide and copolyamide 6/66/12, wherein the first copolyamide is a polyamide 6/66.

### Definitions:

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90 °C for 4 seconds. The shrinkability is measured according to ASTM 2732.

The phrase "longitudinal direction" or "machine direction" herein abbreviated "MD" refers to a direction along the length of the film.

The phrase "outer layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalyzed polymers and polyethylene plastomers and elastomers.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" refers to copolymers of ethylene and vinyl acetate.

As used herein, the term EVOH refers to saponified products of ethylene vinyl ester copolymers. The ethylene content is typically in the range of 25 to 50%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term polyamide refers to homopolymers and copolymers. Typical homopolymer is polyamide 6 (poly-caprolactam).

Typical copolymers are 6/66, 610, 6/12, 6/66/12, 66/610, amorphous polyamides and others. 6/66 copolymamide is a copolymer of polyamide 6 (caprolactam) and polyamide 66 (hexamethylene diamine/adipic acid unit). The abbreviations of copolyamides are well known in the art.

A copolyamide 6/66/12 is a copolymer comprising polyamide 6 units(caprolactam), polyamide 66 units (hexamethylene diamine/adipic acid) and polyamide 12 units (laurylactam).

As used herein the term "ionomer" refers to ethylene-acid copolymers which have been neutralized by metals such as sodium, zinc, lithium or others.

The acid used is usually methacrylic or acrylic acid.

As used herein the term "nanocomposites" refers to compositions of treated clays in polymeric base.

All measurement methods mentioned herein are readily available for the skilled person. For example, they can be obtained from the American National Standards Institute at: www.webstore.ansi.org

All percentages used are per weight unless stated otherwise.

### DETAILED DESCRIPTION OF THE INVENTION

According to a first aspect the present invention is directed to a heat shrinkable film, where the film comprises at least one layer consisting of a blend of a first copolyamide and a copolyamide 6/66/12, wherein the first copolyamide is a polyamide 6/66. The film has a shrinkage of at least 10% measured according to ASTM 2732 in water at 90°C in at least one of MD, TD directions.

According to a further preferred embodiment, the percentage ratio (per weight) of the first and the second copolyamide is from 90/10 to 10/90.

In a further preferred embodiment, the film comprises a sealing layer. This layer allows the film to be heat sealed to itself or to another film thus allowing it to form a hermetically closed container (e.g. a bag).

In the film according to the present invention, the heat sealing layer may comprise a single polyolefin or a blend of different polyolefins. In a preferred version of the structure, the sealing layer comprises at least one homogeneous polyolefin.

In another embodiment, the sealing layer comprises heterogeneous ethylene alpha olefin copolymer with density less than 0.920 g/cm³.

In a further embodiment the sealing layer comprises a homogeneous polyolefin produced with metallocene catalysts.

In a preferred embodiment of the invention, the multilayer film comprises an oxygen barrier material, preferably PVDC, EVOH, polyamide or polyester.

Between the sealing layer and the oxygen barrier layer, a tie layer could be used. Preferred materials for this tie layer may be ethylene ester copolymers, such as ethylene vinyl acetate copolymers, ethylene methyl acrylate copolymers and other materials well known in the art. A preferred version might include maleic anhydrite modified ethylene ester copolymers or maleic anhydrite modified LLDPE. Commercial trademarks are for example BYNEL^{®} from Dupont and ADMER^{®} from Mitsui.

The outer layer according to the present invention comprises preferably polyethylene or polypropylene copolymers. Especially preferred are ethylene octene copolymers with a melting point from about 90 to about 130°C. Blends with EVA are also possible.

Another preferred material for the outer layer is styrene based copolymer, such as styrene butadiene copolymer.

Between the outer and the barrier layer there may be another layer incorporating a tie layer. Preferred materials for this tie layer may be ethylene ester copolymers, such as ethylene vinyl acetate copolymers, ethylene methyl acrylate copolymers and other materials well known in the art. A preferred version might include maleic anhydrite modified ethylene ester copolymers or maleic anhydrite modified LLDPE. Commercial trademarks are for example BYNEL^{®} from Dupont and ADMER^{®} from Mitsui.

Any of the layers described above may also include additives well known in the art such as slip agents, antiblock, polymer processing aids, antistatic, antifog, acid scavengers, odor scavengers and the like. A person skilled in the art may select the right additives according to any particular needs.

In one preferred embodiment, the multilayer film is irradiated. The irradiation may be a beam, gamma radiation, UV radiation or other.

According to a further aspect, the present invention discloses a bag or pouch comprising a film according to the present invention.

In a further aspect, the invention is directed to the use of the films or the bag or pouch of the invention for packaging food. For example, the food item is putted inside the bag and the air is removed (vacuumising) with the help of a vacuum device. Subsequently, the open end of the bag is sealed and the vacuum pack is placed in a heat shrinking media such as hot water under a temperature that ensures the shrink of the pack (e.g. 90°C). The pack than is ready and is characterized by appealing appearance and long shelf life because of the absence of oxygen.

The present invention is now described by the following Examples:

### EXAMPLES

### Example 1

A 5 layer film is produced in a double bubble (the double bubble method is described in US 3,456,044) commercial line with the following recipe:

| | |
|---|---|
| Inner (sealing layer) | 100 % E1 |
| Adjacent layer | 100% M1 |
| Barrier layer | 70% PA1+ 30% PA2 |
| Adjacent layer | 100% M1 |
| Outer layer | 100% E2 |

### See table 1

The thickness of the structure is 35/8/40/8/9 starting from the inner and going to the outer layer.

The processability of the film was unexpectedly good. There was stable orientation and the line speed could be increased much more than if instead of the blend a pure copolyamide 6/66 was used.

As comparison, tests were done with commercial product with thickness 100 microns. The product is marketed as high abuse, meaning it targets the same potential market as the film of the invention.

### Comparative Example 2

A 5 layer film is produced in a double bubble commercial line with the following recipe

| | |
|---|---|
| Inner (sealing layer), | 100 % E1 |
| Adjacent layer | 100% M1 |
| Barrier layer | 70% PA1+ 28% PA2+ 2% nano modified polyamide 6 |
| Adj acent layer | 100% M 1 |
| Outer layer | 100% E2 |

### See also table 1

**TABLE 1**

| Type | Description | Manufacturer | Melt Index g/10 min | Density g/cm³ | Melting point °C |
|---|---|---|---|---|---|
| E1 | ATTANE 4100 | DOW | 1 | 0.912 | 122 |
| E2 | Elite 5400G | DOW | 1 | 0.917 | 122 |
| M1 | MODIFIED EVA | Dupont | 2 | 0.95 | |
| P2 | AFFINITY PL 1880 | Dow | 1 | 0.902 | 100 |
| PA1 | POLYAMIDE 6/66 | Ube | | | 196 |
| PA2 | POLYAMIDE 6/66/12 | Ube | | | 190 |

### Tests

1. Haze measurement. The haze measurement was done according to ASTM D 1003.
2. Gloss measurement. This was done according to BS 2782.
3. Shrinkage measurement done according to ASTM 2732 at 90°C.
4. Puncture resistance

The puncture resistance was measured with a Versa Test instrument from company Mecmesin.

The results are displayed on table 2

**TABLE 2**

| | HAZE | GLOSS | SHRINKAGE (MD/TD) | PUNCTUR E FORCE in kilos |
|---|---|---|---|---|
| Example 1 | 12 | 90 | 30/23 | 5 |
| Comparative Example 2 | 15 | 85 | 28/20 | 4.5 |
| Commercial material | 12 | 85 | 27/22 | 3 |

## Claims

1. A heat shrinkable film, wherein the film comprises at least one layer consisting of a blend of a first copolyamide and a second copolyamide, wherein the first copolyamide is a polyamide 6/66 and the second copolyamide is a polyamide 6/66/12.

2. The film of claim 1, wherein the film has a further layer comprising a oxygen barrier material.

3. The film of one or more of the preceding claims, wherein the film comprises a sealing layer.

4. The film of claim 3, where the sealing layer comprises a polyolefin or a blend of polyolefins.

5. The film of claim 4, where the sealing layer comprises a homogeneous polyolefin.

6. The film of one or more of the preceding claims, where the film comprises an intermediate layer between the sealing and the layer of the blend of copolyamides.

7. The film of claim 6, where the intermediate layer comprises an adhesive tie material.

8. A bag made from the film of any of the previous claims.

## Patentansprüche

1. Wärmeschrumpfbare Folie, wobei die Folie zumindest eine Schicht umfasst, die aus einer Mischung aus einem ersten Copolyamid und einem zweiten Copolyamid besteht, und wobei das erste Copolyamid ein Polyamid 6/66 ist und das zweite Copolyamid ein Polyamid 6/66/12 ist.

2. Folie gemäß Anspruch 1, wobei die Folie eine weitere Schicht aufweist, die ein Sauerstoff-Barrierematerial umfasst.

3. Folie gemäß einem oder mehreren der vorangehenden Ansprüche, wobei die Folie eine Siegelschicht umfasst.

4. Folie gemäß Anspruch 3, wobei die Siegelschicht ein Polyolefin oder eine Mischung aus Polyolefinen umfasst.

5. Folie gemäß Anspruch 4, wobei die Siegelschicht ein homogenes Polyolefin umfasst.

6. Folie gemäß einem oder mehreren der vorangehenden Ansprüche, wobei die Folie eine Zwischenschicht zwischen der Siegelschicht und der Schicht der Mischung aus Copolyamiden umfasst.

7. Folie gemäß Anspruch 6, wobei die Zwischenschicht ein Klebebindematerial umfasst.

8. Tasche, die aus der Folie nach einem der vorhergehenden Ansprüche hergestellt ist.

## Revendications

1. Film thermorétractable, dans lequel le film comprend au moins une couche constituée d'un mélange entre un premier copolyamide et un second copolyamide, dans lequel le premier copolyamide est un polyamide 6/66 et le second copolyamide est un polyamide 6/66/12.

2. Film selon la revendication 1, dans lequel le film a une couche supplémentaire comprenant un matériau faisant barrière à l'oxygène.

3. Film selon l'une ou plusieurs parmi les revendications précédentes, dans lequel le film comprend une couche destinée à assurer l'étanchéité.

4. Film selon la revendication 3, dans lequel la couche destinée à assurer l'étanchéité comprend une polyoléfine ou un mélange de polyoléfines.

5. Film selon la revendication 4, dans lequel la couche destinée à assurer l'étanchéité comprend une polyoléfine homogène.

6. Film selon l'une ou plusieurs parmi les revendications précédentes, dans lequel le film comprend une couche intermédiaire entre la couche destinée à assurer l'étanchéité et la couche de mélange des copolyamides.

7. Film selon la revendication 6, dans lequel la couche intermédiaire comprend un matériau de liaison adhésif.

8. Sachet fabriqué à partir du film selon l'une quelconque des revendications précédentes.
